# EUROPEAN PATENT APPLICATION

(11) **EP 2 399 547 A1**
(43) Date of publication of application: **28.12.2011**
(21) Application number: 10425215.0
(22) Date of filing: 25.06.2010
(51) Int. Cl.: A61C 19/06

(54) **Safety dispensing device for substances for oral hygiene**

(71) Applicant: OCSLabo-OralCareScienceLabo Sagl, 6900 Lugano (CH)
(72) Inventor: Marino, Elio, 20090 Segrate (MI) (IT)
(74) Representative: Perani, Aurelio

(57) **Abstract**

Safety dispensing device to dispense substances for oral hygiene inside the oral cavity, in particular to dispense teeth-whitening substances, said substances being contained in a respective pressure cylinder (17) with button (22) and nozzle (23) for spray delivery, including a base body (1) defining an internal cavity (2), a pair of arched embossed screens (8, 9) protruding from said base body, one opposite to the other, and defining a free zone (A) between them, said screens (8, 9) being arched so to adapt to the cheeks of the oral cavity of a user when positioned inside said oral cavity, a communicating opening (31) between said cavity (2) of the base body (1) and the free zone (A) delimited by said arched screens (8, 9). The device includes also means (24, 25, 26, 27) to accommodate at least a part (19, 20) of said cylinder (17) containing the substance to dispense and connect it to said base body (1) with the positioning of said button (22) inside said chamber (2) and of said dispenser nozzle (23) slidingly inside said opening (31). Additionally, the device includes one protection shield (16) positioned in the zone (A) between said arched screens (8, 9), said protection shield (16) being arched too and connected to the ends of said arched screens (8, 9).

## Description

The present invention relates to a safety dispensing device for substances for oral hygiene, in particular to a device for dispensing teeth-whitening substances directly in the oral cavity.

As it is known, teeth discoloration is a phenomenon concerning many people; it is due, on one side, to porous dentine and to loss of enamel and, on the other side, to consumption of pigmenting food, such as, for example, coffee, tea, red wine, etc.. Unfortunately, very often an accurate oral hygiene is not sufficient to give back the teeth their natural white and it is necessary to resort to professional cleaning by a dentist.

Whitening procedure is normally carried out professionally, for example, by a method known with the name of "tray bleaching" or by lamps. The same procedure is sometimes carried out also at home by proper masks or strips. In both cases, whitening implies the application of whitening substances directly on the teeth. Such substances, diluting in the mouth, come in contact with the mucosae and are partially ingested.

Whitening sessions cause enamel abrasions, create sensitivity due to the increase of dentinal permeability, cause damages to the mucosae of the oral cavity and have systemic toxicity.

Other adverse effects such as burns/scalds are due to the whitening agents in case they come in contact with the mucosae, especially with dry mucosae such as skin and eyes.

These adverse effects are more relevant the more the whitening substances are active towards the teeth, the longer the teeth are exposed to such substances and the wider the application area of the whitening substances. The aim of the present invention is to provide a device that allows to dispense substances for hygiene inside the oral cavity and in particular substances performing a whitening treatment on the teeth with a high degree of safety, so that it can be used also without the guide or the specific training of a professional physician, thereby limiting the risks of provoking damages to the oral mucosa.

This possibility of use of the device does not exclude that it may be used also professionally in dental practices.

This and other aims that will better emerge in the continuation of the description are achieved by a safety dispensing device characterized according to the following claim 1.

The invention will now be mainly described with reference to an example of practical actuation illustrated in the attached drawings, wherein:

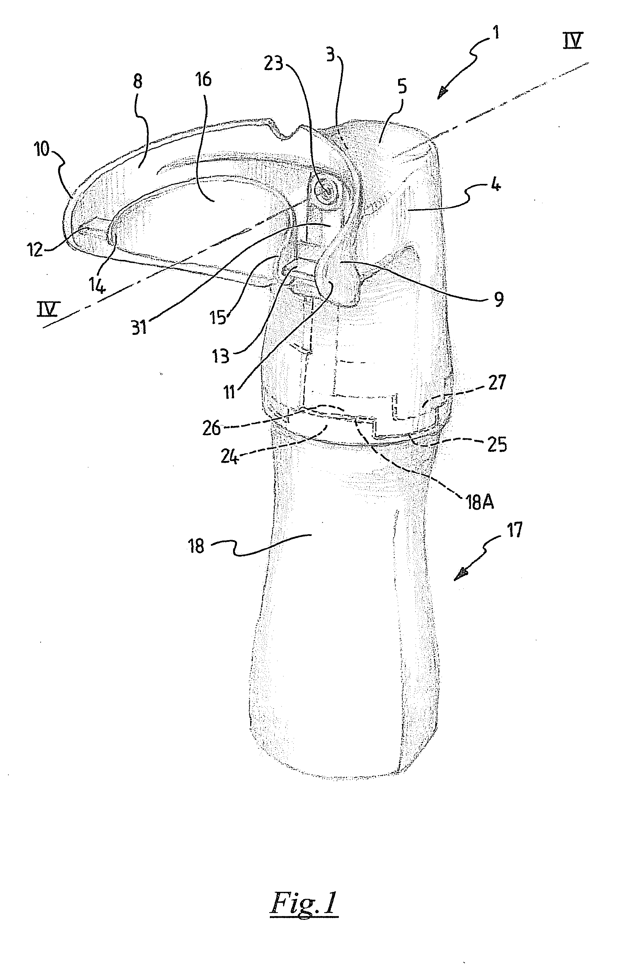

- figure 1 shows, in perspective view, a safety dispensing device according to the invention applied on a container containing the substance to dispense in the oral cavity, said container being of spray type;

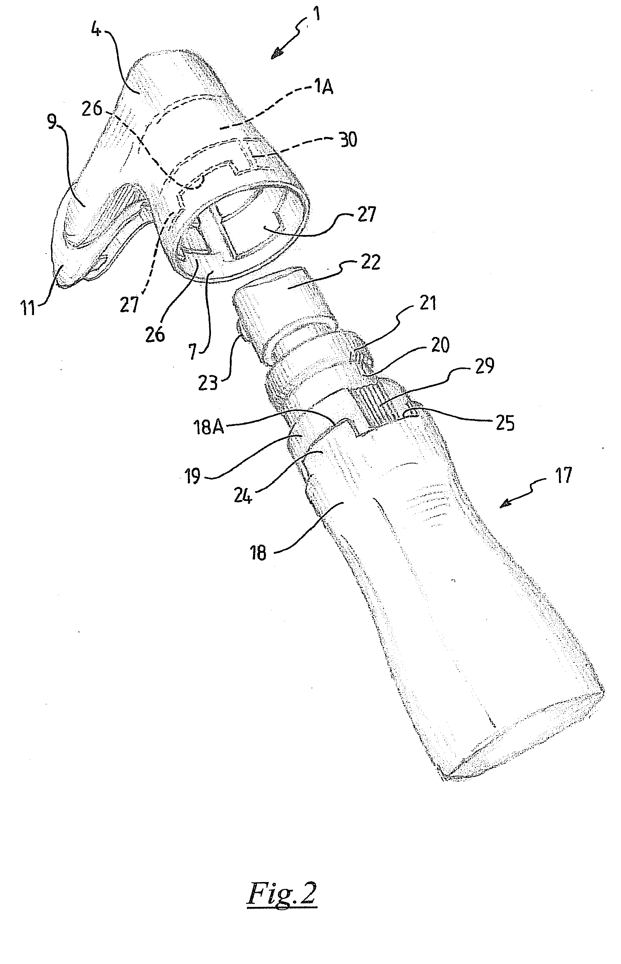

- figure 2 shows, in perspective view, the safety dispensing device according to the invention separated from the spray container;

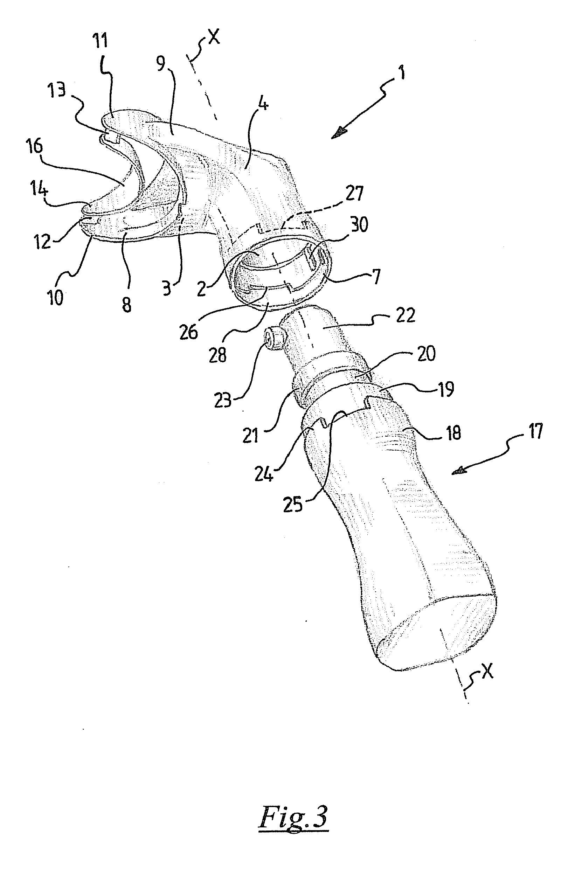

- figure 3 shows a different perspective view of the device of figure 2 with the spray container seen from a different angle;
- figure 4 shows a cross section of the device of figure 1 made along its IV-IV line, with the spray container blocked in its non-operational position;
- figure 5 shows a cross section view like that of figure 4 with the spray container in operational position wherein the substance can be dispensed;
- figure 6 shows, in a perspective view, the device positioned in the oral cavity of a user.

With reference to the above mentioned figures, the safety dispensing device according to the invention includes a base body 1 provided with a cavity 2 delimited by lateral walls 3, 4, by a top wall 5 and a bottom wall 6 from which a tubular tract with an opening 7 elongates. From the lateral walls 3 and 4 of the base body 1 two plate-shaped embossed lateral screens 8 and 9 branch off, delimiting an intermediate zone A and ending with the respective endings 10 and 11. Screens 8 and 9 have an arched shape so as to adapt to the cheeks of the oral cavity of a user when positioned inside the oral cavity. At the ends 10 and 11 of screens 8 and 9 connectors 12 and 13 branch off, which support the ends 14 and 15 of a protection shield 16 that gives safety to the use of the device.

Such protection shield 16 has an arched configuration essentially concentric with the arched shape of screens 8 and 9 and is able to be positioned in the oral cavity behind the upper and lower teeth, so as to protect the oral mucosae.

Compared to the height of each of said arched screens 8 and 9, connectors 12 and 13 are placed essentially in a central position.

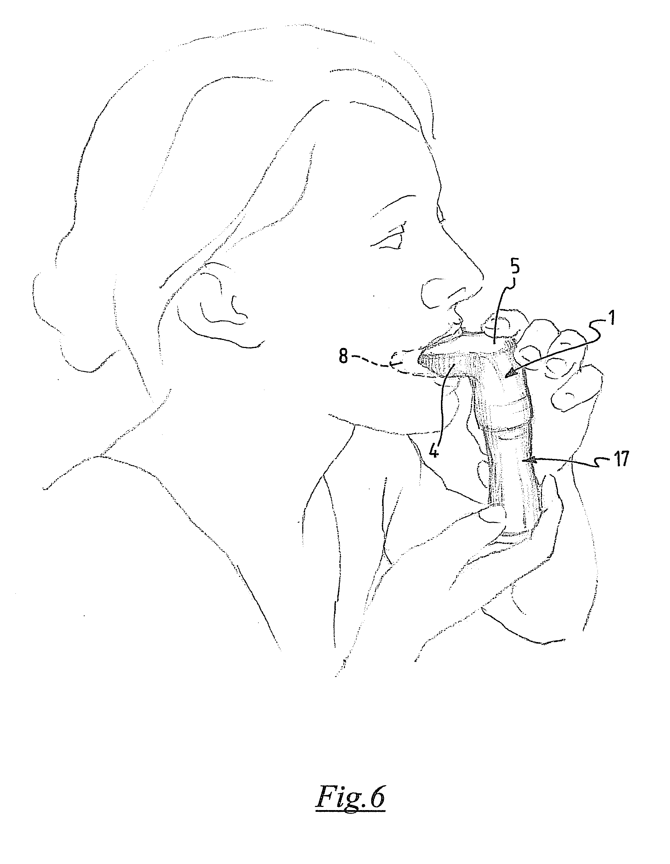

Arched screens 8 and 9 functionally constitute a mouthpiece and can be built in one piece, with the lateral walls 3 and 4 defining the cavity 2. They are placed in the oral cavity and held in position by the upper and lower teeth that, when the oral cavity is closed, close on the connectors 12 and 13 keeping the dispensing device securely firm in front of the user's mouth, as schematically illustrated in figure 6.

Also the arched screens 8 and 9, when they are in position in the oral cavity, determine an essential protection for the mucosae of the user's cheeks and lips while leaving the front part of the teeth exposed to the action of the whitening substance that is sprayed operating on the pressure cylinder 17 that contains it. The cylinder 17 is inserted in the body 1 through the opening 7 and is ready to dispense the whitening substance contained in it only after it is placed in the operational position as it will be clear from the continuation of the description.

The pressure cylinder 17 includes a body 18 from which, along the axial direction X-X, a neck elongates with a first tract 19 and a second tract 20 coaxial and concentric to the first. This latter tract 20 is linked on the border 21, to a conventional spray valve that is operated when a pressure is exerted on the piston 22 provided with a nozzle 23.

The second tract 20 of the neck of the cylinder 17 has a smaller diameter than the first tract 19 and the diameter of the latter is smaller than the diameter of the end of the body 18 from which said first tract of neck elongates. In the transition zone between the end of the body 18 and the first tract 19 of the neck, a step 18A forms including reliefs 24 and dips 25, both axial with circumferential extension.

Such reliefs 24 and dips 25 are able to fit with dips 26 and reliefs 27, respectively, both axial with circumferential extension essentially of the same size of reliefs 24 and dips 25, obtained on the internal wall 28 of the cavity 2 of the body 1.

The same tract 19 of the neck of the cylinder 17 is provided with an axial groove 29, with the bottom surface preferably milled, able to axially fit with an axial protrusion 30 also obtained on the internal surface 28 of the cavity 2 of the body 1.

The circumferential width of the groove 29 is larger than that of the axial protrusion 30.

In this way, while the fitting of the axial groove 29 with the protrusion 30 allows a correct insertion of the neck of the cylinder 17 in the cavity 2 through the opening 7, the larger circumferential width of the groove 29 allows the possibility of angularly displacing the cylinder 17 around its longitudinal X-X axis for the reasons and in the ways that will become clear from the continuation of the description.

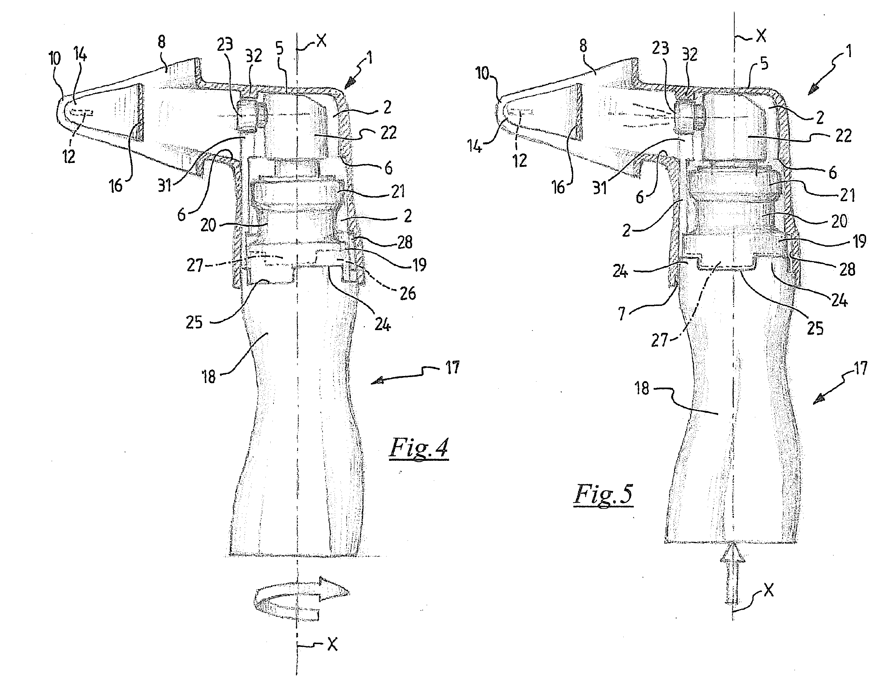

The coupling between the axial groove 29 and the protrusion 30 substantially occurs by friction between the facing walls presenting a light interference. By the insertion of the neck of the cylinder 17 in the cavity 2, through the opening 7 and by the guide determined by the axial fitting between the groove 29 and the protrusion 30, the piston 22 of the spray valve finds itself against the top wall of the body 1 with the nozzle 23 positioned in the opening 31 against a support protrusion 32. Simultaneously, as illustrated in figure 4, the axial protrusions 24 of the profile of the step 18A of the neck of the cylinder 17 fit in with the protrusions 27 brought by the internal wall 28 of the cavity 2 of the base body 1.

In such conditions the cylinder 17 is in a non-operational position, i.e. a safety position, because any pressure exerted on the wall 5 does not determine any lowering of the piston 22 and therefore does not determine the spray of the substance contained in the cylinder.

Only following an angular displacement of the cylinder 17 around its longitudinal X-X axis, therefore taking the axial protrusions 24 to face the grooves 26 and, simultaneously, the grooves 25 to face the protrusions 27, as illustrated in figure 5, a relative movement between the body 1 of the device and the cylinder 17 can be performed determining the compression of the piston 22 and causing the spray from the nozzle 23 that, in the meantime, results correctly positioned in front of the zone A encompassed by the arched screens 8 and 9.

From what described above, it appears evident that the angular displacement of the cylinder 17 to put it in its operational spray position must occur only after having correctly carried out the positioning of the device in the oral cavity of the user.

Therefore, the device according to the invention achieves its objective with a high degree of safety since accidental dispensing of the whitening substance is prevented before the device is correctly positioned in the oral cavity.

Additionally, it is observed that, in case of a substance provided with whitening power and thus tendentially dangerous towards the mucosae of the oral cavity because of its aggressiveness, these result protected by the arched screens 8, 9 and by the protection shield 16. They act in such a way that the whitening substance, for example 35% H₂O₂, is sprayed substantially only against the teeth avoiding direct contacts with the cheeks and lips mucosa.

As far as the composition of the whitening substance contained in the cylinder 17 is concerned, it can be of various types. For example, one (C1) can be for an initial treatment based on hydrogen peroxide, one (C2) of maintenance of the result obtained by application of the first composition, based on hydrogen peroxide too, but at a different concentration.

Both compositions can be added with result stabilizing and desensitizing products.

The composition (C1) can be preferably in the form of an aqueous solution containing hydrogen peroxide at a concentration of 19 to 30%, expressed as parts by weight of the total weight of the solution. Preferably, the concentration can be between 19 and 27%, even more preferably between 20 and 25%. Also the composition (C2) can be preferably in the form of an aqueous solution, but containing hydrogen peroxide at a concentration between 11 and 17%.

The cosmetic treatment achievable with the dispensing device according to the invention comprises nebulizing the whitening solution (C1) or (C2) in the oral cavity, depending on the fact that it is the initial treatment or the maintenance treatment, and keeping it in the mouth for a time from one to three min, acting on the cylinder 17 that contains it with a push exerted along the X-X axis direction until compression of the piston 22 through the top wall 5 of the cavity 2 that acts as a correspondence, while the device is held as a mouthpiece within the oral cavity of the user.

Although in the preceding description particular reference was made to compositions for teeth whitening, it is evident that the same dispensing device according to the invention can be used to nebulize other compositions in the oral cavity for example those formed by hygiene products and/or refreshing products. Although, preferably, the device is made of suitable plastic materials, it is evident that the same device can also be made of metallic materials, for example of stainless steel.

In addition, it can have any size, depending on the necessities.

## Claims

1. Device for dispensing substances for oral hygiene inside the oral cavity, in particular for dispensing teeth-whitening substances , said substances being contained in a respective pressure cylinder (17) with button (22) and nozzle (23) for spray dispensing, **characterized in that** it comprises a base body (1) defining an internal cavity (2), a pair of embossed screens (8, 9) protruding from said base body, one opposite to the other and defining a free zone (A) between them, said screens (8, 9) being suitable to adapt to the cheeks of the oral cavity of a user when positioned inside said oral cavity, a communicating opening (31) between said cavity (2) of the base body (1) and the free zone (A) delimited by said screens (8, 9) , means (24, 25, 26, 27) to accommodate at least a part (19, 20) of said cylinder (17) containing the substance to dispense and to connect it to said base body (1) with the positioning of said button (22) inside said chamber (2) and of said dispenser nozzle (23) sliding within said opening (31).

2. Device according to claim 1, **characterized in that** it comprises a protection shield (16) positioned in zone (A) delimited by said screens (8, 9), said protection shield (16) being connected to the ends of said screens (8, 9).

3. Dispensing device according to claim 1 or 2, wherein said screens (8, 9) are arched and are built in one piece with the respective lateral walls (3, 4) of said cavity (2) and wherein also said protection shield (16) is arched.

4. Device according any of claims from 1 to 3, **characterized in that** said arched screens (8, 9) and said protection shield (16) are plate-shaped.

5. Device according any of claims from 1 to 4, **characterized in that** said cylinder (17) comprises a neck and that said neck comprises a first axial tract (19) adjacent to the body (18) of the cylinder and a second axial tract (20) as a continuation of the first, both tracts being concentric and the second tract (20) having a smaller diameter than the diameter of the first tract (19) which results smaller than the diameter of the end of the body (18) from which said first tract elongates forming a step (18a).

6. Device according any of claims from 1 to 5, **characterized in that** the step (18A) between the end of the body (18) of said cylinder (17) and the said first tract (19) of the neck presents a profile with a plurality of protrusions (24) and grooves (25) and said internal wall (28) of said cavity (2) of the body (1) presents a correspondent plurality of grooves (26) and protrusions (27), said protrusions and said grooves, with reference to the longitudinal (X-X) axis of the cylinder, presenting essentially equal axial depths and circumferential extensions.

7. Device according to any of claims from 1 to 6, **characterized in that** said first tract (19) of the neck of said cylinder (17) presents a groove (29) both axially and circumferentially extended and said internal wall (28) inside the cavity (2) of the body (1) presents an axial protrusion (30) suitable to fit with said groove (29), the circumferential size of said groove (29) being larger than that of the correspondent protrusion (30) allowing angular displacements of the cylinder (17) around its longitudinal (X-X) axis between a non-operational position and an operational position wherein the button (22) of the cylinder can be operated.
